# EUROPÄISCHE PATENTSCHRIFT

(11) **EP 0 986 710 B1**
(45) Veröffentlichungstag und Bekanntmachung des Hinweises auf die Patenterteilung: **11.08.2004**
(21) Anmeldenummer: 98959744.8
(22) Anmeldetag: 21.10.1998
(51) Int. Cl.: F04B 53/14

(54) **KOLBENPUMPE**
RECIPROCATING PUMP
POMPE ALTERNATIVE

(30) Priorität: 09.01.1998 DE 19800499
(43) Veröffentlichungstag der Anmeldung: 22.03.2000
(73) Patentinhaber: ROBERT BOSCH GMBH, 70442 Stuttgart (DE)
(72) Erfinder: SCHULLER, Wolfgang, D-74343 Sachsenheim (DE); ECKSTEIN, Ursula, D-71701 Schwieberdingen (DE)
(86) Internationale Anmeldenummer: PCT/DE1998/003073
(87) Internationale Veröffentlichungsnummer: WO 1999/035401

(56) Entgegenhaltungen:
- EP-A- 0 519 533
- WO-A-92/15474
- DE-A- 19 618 013
- DE-A- 19 712 147
- GB-A- 1 603 849
- US-A- 3 980 004
- US-A- 4 270 440

## Beschreibung

### Stand der Technik

Die Erfindung geht aus von einer Kolbenpumpe insbesondere für hydraulische Fahrzeugbremsanlagen nach der Gattung des Hauptanspruchs.

Eine derartige Kolbenpumpe ist beschrieben in der deutschen Patentanmeldung DE 197 12 147.0, welche ein Familienmitglied der EP-Patentanmeldung EP 0 861 376 A ist, die einen Stand der Technik im Sinne des Artikels 54(3) EPÜ darstellt. Die angemeldete Kolbenpumpe weist ein Pumpengehäuse auf, in dem ein im wesentlichen zylindrischer Kolben in axialer Richtung verschiebbar geführt aufgenommen und beispielsweise mittels eines rotierend antreibbaren Exzenters zu einer in axialer Richtung hin- und hergehenden Hubbewegung antreibbar ist. Zur axialen Führung im Pumpengehäuse weist der Kolben einen auf ihn aufgeschobenen Führungsring auf, der sich mit dem Kolben zusammen im Pumpengehäuse hin- und herbewegt. Um den Führungsring in axialer Richtung auf dem Kolben zu halten, ist auf dem Kolben ein Stützring angebracht, an dessen einer Stirnseite der Führungsring anliegt. Dabei sind bei der beschriebenen Kolbenpumpe der Führungsring und der Stützring so auf dem Kolben angeordnet, daß der Stützring den Führungsring in axialer Richtung gegen einen vom Kolben bei einem Förderhub der Kolbenpumpe in einem Verdrängungsraum der Kolbenpumpe erzeugten Druck abstützt.

### Vorteile der Erfindung

Bei der erfindungsgemäßen Kolbenpumpe mit den Merkmalen des Anspruchs 1 sind der Führungsring und der Stützring miteinander lösbar oder unlösbar verbunden. Dies hat zunächst den Vorteil eines verringerten Montageaufwandes, da lediglich ein Ring auf den Kolben aufgeschoben werden muß, und einer verringerten Montagefehlerhäufigkeit, da sich der Stütz- und der Führungsring nicht in vertauschter Reihenfolge auf dem Kolben anbringen lassen oder einer der beiden Ringe vergessen werden kann. Weiterer Vorteil ist, daß sich eine Baulänge des Kolbens und damit auch des Pumpengehäuses um eine axiale Dicke des Führungsrings verkürzen läßt; wobei insbesondere der Verkürzung des Pumpengehäuses bei Verwendung in schlupfgeregelten, hydraulischen Fahrzeugbremsanlagen in Zukunft erhebliche Bedeutung zukommen dürfte. Hinzu kommt der Vorteil, daß kein Quetschspalt zwischen dem Stützring und dem Pumpengehäuse vorhanden ist, in den der Führungsring eindringen könnte.

Die Unteransprüche haben vorteilhafte Ausgestaltungen und Weiterbildungen der im Anspruch 1 angegebenen Erfindung zum Gegenstand.

Bei einer Ausgestaltung der Erfindung gemäß Anspruch 4 ist vorgesehen, den Stützring zur axialen Fixierung auf dem Kolben kraftschlüssig auf den Kolben aufzupressen.

Bei einer Ausgestaltung der Erfindung gemäß Anspruch 5 stützt sich der Stützring axial in zumindest einer Richtung an einer am Kolben ausgebildeten Stützfläche ab. Die Stützfläche kann beispielsweise umlaufend als Flanke einer in den Kolben eingestochenen Nut ausgebildet sein, in die der Stützring formschlüssig eingreift. Auch kann die Stützfläche umlaufend als Übergang von einem durchmesserkleineren zu einem durchmessergrößeren Abschnitt des Kolbens ausgebildet sein, an der sich der Stützring axial in einer Richtung formschlüssig abstützt. Als weitere Möglichkeiten kann die Stützfläche an einer oder mehreren Stellen des Umfangs des Kolbens in Form radial abstehender Nasen oder Ausnehmungen im Kolbenumfang, in die der Stützring mit Nasen eingreift, ausgebildet sein.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflussigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
- Figur 1: Eine erfindungsgemäße Kolbenpumpe im Achsschnitt; und
- Figur 2: einen abgewandelten Stützring mit Führungsring für die Kolbenpumpe aus Figur 1 gemäß der Erfindung.

### Beschreibung des Ausführungsbeispiels

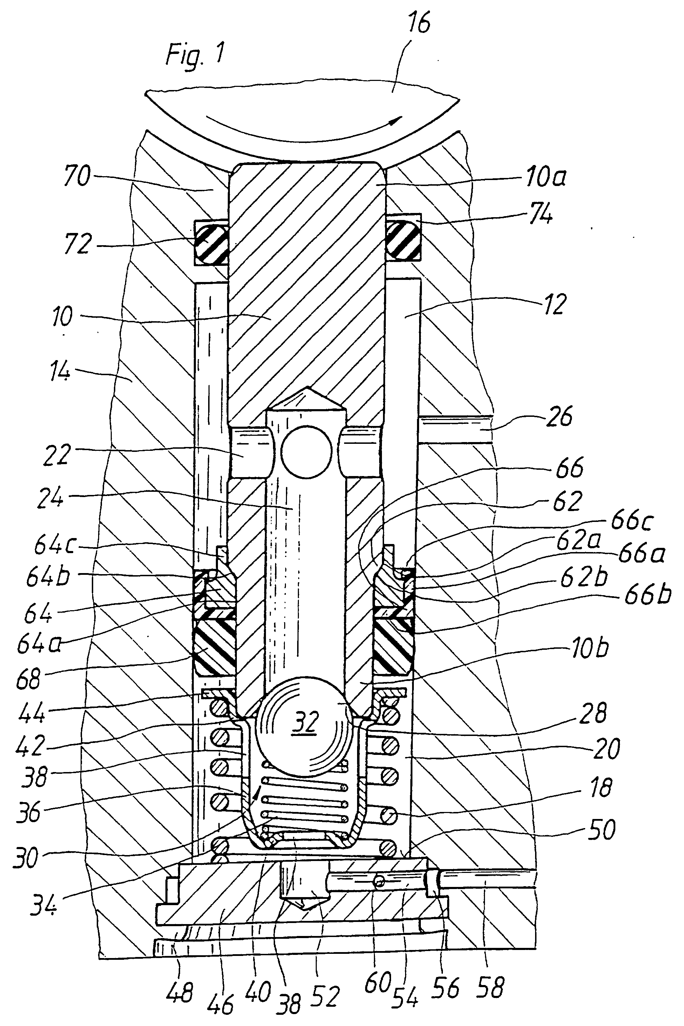

Die in Figur 1 dargestellte, erfindungsgemäße Kolbenpumpe weist einen im wesentlichen zylindrischen Kolben 10 auf, der in einer gestuften, durchgehenden Pumpenbohrung 12 in einem ein Pumpengehäuse 14 bildenden Hydraulikblock einer im übrigen nicht dargestellten, schlupfgeregelten, hydraulischen Fahrzeugbremsanlage axialverschieblich aufgenommen ist. Von dem das Pumpengehäuse 14 bildenden Hydraulikblock ist der klaren Darstellung wegen lediglich ein die Kolbenpumpe umgebendes Bruchstück dargestellt. In den Hydraulikblock 14 sind außer der Kolbenpumpe weitere, nicht dargestellte, hydraulische Bauelemente wie Magnetventile, Hydrospeicher und -dämpfer der Fahrzeugbremsanlage in an sich bekannter Weise eingesetzt und hydraulisch miteinander und mit der Kolbenpumpe verschaltet.

Zum Antrieb des Kolbens 10 dient ein elektromotorisch rotierend antreibbarer Exzenter 16, der auf einer Stirnseite des Kolbens 10 im Pumpengehäuse 14 angeordnet ist. Eine als Schraubendruckfeder ausgebildete Kolbenrückstellfeder 18 ist auf einer dem Exzenter 16 abgewandten Seite in die Pumpenbohrung 12 eingesetzt. Die Kolbenrückstellfeder 18 greift an einem dem Exzenter 16 abgewandten Stirnende des Kolbens 10 an und drückt diesen in Anlage an einen Umfang des Exzenters 16. Bei rotierendem Antrieb des Exzenters 16 treibt dieser den Kolben 10 gegen eine Kraft der Kolbenruckstellfeder 18 zu einer in axialer Richtung hin- und hergehenden Hubbewegung an Aus Gründen einer kostengünstigen Fertigung ist der Kolben 10 im wesentlichen vollzylindrisch ausgebildet. Zum Einlaß von Bremsflüssigkeit in einen Verdrängungsraum 20 der Kolbenpumpe, der sich auf der dem Exzenter 16 abgewandten Stirnseite des Kolbens 10 in der Pumpenbohrung 12 befindet, ist der Kolben 10 ungefähr in seiner Längsmitte mit zwei einander kreuzenden Querbohrungen 22 versehen, die eine axiale Sackbohrung 24 nahe ihres Grundes kreuzen, die an der dem Exzenter 16 abgewandten Stirnseite des Kolbens 10, also in den Verdrängungsraum 20 mündet. In dem das Pumpengehäuse 14 bildenden Hydraulikblock ist eine Einlaßbohrung 26 angebracht, die ungefähr in Höhe der Querbohrungen 22 des Kolbens 10 in die Pumpenbohrung 12 des Pumpengehäuses 14 mündet. Die Einlaßbohrung 26 kommuniziert durch die Pumpenbohrung 12 hindurch mit den Querbohrungen 22 und durch diese mit der zum Verdrängungsraum führenden Sackbohrung 24.

Die dem Verdrängungsraum 20 zugewandte Mündung der Sackbohrung 24 im Kolben 10 ist konisch als Ventilsitz 28 eines als federbelastetes Rückschlagventil ausgebildeten Einlaßventils 30 der Kolbenpumpe ausgebildet. Das Einlaßventil 30 weist eine Ventilkugel 32 als Ventilschließkörper- auf, die von einer als Schraubendruckfeder ausgebildeten Ventilschließfeder 34 gegen den Ventilsitz 28 gedrückt wird. Die Ventilkugel 32 und die Ventilschließfeder 34 sind in einem napfförmigen Ventilkäfig 36 aufgenommen, der in Verlängerung des Kolbens 10 an dessen dem Exzenter 16 abgewandten, d. h. dem Verdrängungsraum 20 zugewandten Stirnende angebracht ist. Der Ventilkäfig 36 ist ein Tiefziehteil aus Blech, das Durchströmöffnungen 38 an Umfang und Boden aufweist. Die Ventilschließfeder 34 stützt sich innen am Boden 40 des Ventilkäfigs 36 ab. Der Ventilkäfig 36 befindet sich im Verdrängungsraum 20 der Kolbenpumpe.

Zur Befestigung am Kolben 10 weist der Ventilkäfig 36 eine Ringstufe 42 auf, mit der er sich zu einer offenen Seite hin erweitert und mit der er an dem dem Exzenter 16 abgewandten Stirnende des Kolbens 10 anliegt. Ein freier Rand des Ventilkäfigs 36 ist radial nach außen abstehend zu einem Federteller 44 umgeformt, gegen den die Kolbenrückstellfeder 18 drückt. Über den Federteller 44 und die Ringstufe 42 drückt die Kolbenrückstellfeder 18 den Kolben 10 in axialer Richtung des Kolbens 10 in Anlage an den Umfang des rotierend antreibbaren Exzenters 16, der sich auf der der Kolbenrückstellfeder 18 abgewandten Stirnseite des Kolbens 10 befindet. Zugleich hält die Kolbenrückstellfeder 18 den Ventilkäfig 36 mit der in ihm einliegenden Ventilschließfeder 34 und der Ventilkugel 32 an dem dem Verdrängungsraum 20 zugewandten Stirnende des Kolbens 10. Die Kolbenrückstellfeder 18 ist erheblich stärker ausgebildet als die Ventilschließfeder 34, so daß die Kolbenrückstellfeder 18 den Ventilkäfig 36 bei allen beim Betrieb der Kolbenpumpe auftretenden Belastungen gegen die Kraft der Ventilschließfeder 34 am Kolben 10 hält.

Der Verdrangungsraum 20, der Teil der Pumpenbohrung 12 ist, wird auf einer dem Exzenter 16 abgewandten Stirnseite von einem Verschlußstopfen 46 verschlossen, der in eine Mündung der Pumpenbohrung 12 eingesetzt und durch eine umlaufende Verstemmung 48 des Pumpengehäuses 14 druckfest abdichtend gehalten ist. Die Kolbenrückstellfeder 18 stützt sich auf einer dem Verdrängungsraum 20 zugewandten Stirnseite 50 des Verschlußstopfens 46 ab. Zum Auslaß von Bremsflussigkeit aus dem Verdrängungsraum 20 der Kolbenpumpe ist im Verschlußstopfen 46 eine kurze, axiale Sackbohrung 52 angebracht, von der eine Radialbohrung 54 zum Umfang des Verschlußstopfens 46 führt. Die Radialbohrung 54 mündet in einen den Verschlußstopfen 46 umgebenden Ringkanal 56, von dem abgehend eine Auslaßbohrung 58 im Pumpengehäuse 14 angebracht ist. In die Radialbohrung 54 im Verschlußstopfen 46 ist ein Rückschlagventil als Auslaßventil 60 eingesetzt, das der besseren Übersichtlichkeit wegen in der Zeichnung nur symbolhaft dargestellt ist. Das Auslaßventil 60 läßt sich auch an anderer Stelle (beispielsweise in der Auslaßbohrung 58) anordnen.

Der Kolben 10 weist einen Abschnitt 10a größeren Durchmessers auf seiner dem Exzenter 16 zugewandten Seite und einen Abschnitt 10b kleineren Durchmessers auf seiner dem Exzenter 16 abgewandten, d. h. dem Verdrängungsraum 20 zugewandten Seite auf. Die Durchmesser der beiden Abschnitte 10a, 10b des Kolbens 10 unterscheiden sich nur wenig. Ein Übergang 62 vom durchmesser kleineren Abschnitt 10b zum durchmessergrößeren Abschnitt 10a befindet sich axial gesehen zwischen den Querbohrungen 22 und dem dem Exzenter 16 abgewandten Stirnende des Kolbens 10. Der Übergang 62 kann beispielsweise mit einer radialen oder konischen Ringstufe erfolgen, im dargestellten Ausführungsbeispiel ist der Übergang 62 kontinuierlich mit umlaufenden Rundungen 62a, 62b ausgeführt. Der Übergang 62 bildet eine Stützfläche des Kolbens 10. Der Kolben 10 kann beispielsweise spanend oder durch Umformen, beispielsweise durch Kaltschlagen hergestellt sein, wobei das Umformen eine kostengünstige Herstellmöglichkeit bildet. Da sich die Durchmesser der beiden Abschnitte 10a, 10b des Kolbens 10 nur wenig unterscheiden, ist lediglich ein geringer Materialabtrag bzw. eine geringe Materialumformung erforderlich, um den Abschnitt 10b kleineren Durchmessers und den Übergang 62 am Kolben 10 auszubilden.

Auf den Kolben 10 ist ein Stützring 64 aufgeschoben, dessen Loch sich von einem kleineren Durchmesser 64a über eine konische Ringstufe 64b auf einen größeren Durchmesser 64c erweitert. Mit seiner konischen Ringstufe 64b stützt sich der Stützung 64 in axialer Richtung am Übergang 62 vom durchmesser kleineren Abschnitt 10b zum durchmessergrößeren Abschnitt 10a des Kolbens 10 ab.

Auf dem Stützung 64 ist ein den Stützring 64 am Umfang umschließender Führungsring 66 aus Poly-Tetra-Fluor-Ethilen (PTFE) angeordnet, der verschiebbar innen an der Pumpenbohrung 12 anliegt. Im dargestellten Ausfuhrungsbeispiel weist der Führungsring 66 einen L-förmigen Ringquerschnitt auf, wobei ein einen Hohlzylinder bildender Schenkel 66a des Führungsrings 66 den Stützring 64 an dessen Umfang umschließt und innen an der Pumpenbohrung 12 anliegt und ein anderer, eine Lochscheibe bildender Schenkel 66b des L-förmigen Ringquerschnitts des Führungsrings 66 einstückig vom einen Schenkel 66a radial nach innen zum durchmesserkleineren Abschnitt 10b des Kolbens 10 steht. Dieser andere, eine Ringscheibe bildende Schenkel 66b des Führungsrings 66 liegt auf einer dem Verdrängungsraum 20 zugewandten Stirnseite des Stützrings 64 an. Auf einer dem anderen Schenkel 66b abgewandten Seite weist der eine Schenkel 66a einen nach innen stehenden Wulst 66c auf, mit dem der Führungsring 66a den Stützring 64 nach Art einer Clipsverbindung axial übergreift und auf diese Weise mit dem Stützring 64 verbunden ist. Der Führungsring 66 führt den Kolben 10 an dessen dem Verdrängungsraum 20 zugewandten Ende über den Stützring 64 axial in der Pumpenbohrung 12.

Zur Abdichtung des Kolbens 10 im Pumpengehäuse 14 ist ein Elastomer-Dichtring 68 auf den durchmesserkleineren Abschnitt 10b des Kolbens 10 aufgeschoben, der axial zwischen dem Stützring 64 mit dem Führungsring 66 und zwischen dem Federteller 44 angeordnet und auf diese Weise axial auf dem Kolben 10 gehalten ist. Ein axialer Abstand zwischen dem Führungsring 66 und dem Federteller 44 ist größer als eine axiale Dicke des Elastomer-Dichtrings 68, so daß dieser axial nicht vorgespannt ist.

Ein dem Exzenter 16 zugewandtes Ende des Kolbens 10 ist in einem verjüngten Abschnitt 70 der Pumpenbohrung 12 axial geführt und mittels eines O-Rings 72 abgedichtet, der in eine umlaufende Nut 74 eingelegt ist, die in den verjüngten Abschnitt 70 der Pumpenbohrung 12 eingestochen ist. Auf der Seite des Exzenters 16 ist der Kolben 10 also mit seinem durchmessergrößeren Abschnitt 10a axial geführt.

Der Stützring 64 weist in seinem Abschnitt 64c größeren Durchmessers eine Presspassung mit dem durchmessergrößeren Abschnitt 10a des Kolbens 10 auf, im Abschnitt 64a kleineren Durchmessers weist der Stützring 64 eine Stielpassung zum durchmesserkleineren Abschnitt 10b des Kolbens 10 auf. Dies hat zunächst den Vorteil, daß der Stützring 64 problemlos und ohne die Gefahr einer Beschädigung einer Innenfläche des Stützrings 64 oder einer Außenfläche des Kolbens 10 bis zum Erreichen des Übergangs 62 auf den Kolben 10 aufgeschoben werden kann und erst bei Erreichen des Übergangs 62 ein kurzes Stück in axialer Richtung auf den Kolben 10 aufgepreßt werden muß. Weiterer Vorteil ist, daß der Stützring 64 und mit ihm zusammen der Fuhrungsring 66 am durchmessergrößeren Abschnitt 10a des Kolbens 10 koaxial gehalten ist, also an dem Abschnitt 10a, an dem auch das dem Exzenter 16 zugewandte Ende des Kolbens 10 im Pumpengehäuse 14 geführt ist. Dadurch ist eine exakt fluchtende Führung des Kolbens 10 sowohl im verjüngten Abschnitt 70 des Pumpengehäuses 14 als auch im Bereich des Führungsrings 66 sichergestellt. Weiterer Vorteil der Presspassung des Stützrings 64 auf dem durchmesser größeren Abschnitt 10a des Kolbens 10 und damit der fluchtenden Ausrichtung des Stützrings 64 zusammen mit dem Führungsring 66 am durchmessergrößeren Abschnitt 10a des Kolbens 10 ist, daß sich der durchmessergrößere Abschnitt 10a des Kolbens 10 extrem toleranzgenau beispielsweise durch Durchgangsschleifen mit hochwertiger Paßform- und Oberflächengüte und zudem verhältnismäßig einfach herstellen läßt. Der Aufwand zur Herstellung des durchmesserkleineren Abschnitts 10b mit gleichen Qualitäten wäre erheblich größer. Zudem würde eine exakt zum durchmessergrößeren Abschnitt 10a fluchtende Herstellung des durchmesserkleineren Abschnitts 10b, die erforderlich wäre, wenn ein Ende des Kolbens 10 am durchmessergrößeren Abschnitt 10a und das andere Ende des Kolbens 10 am durchmesserkleineren Abschnitt 10b geführt werden würde, den Herstellungsaufwand weiter vergrößern.

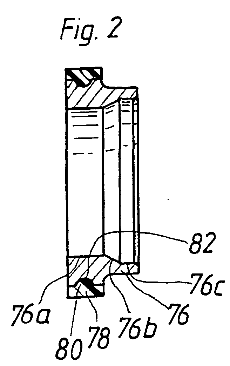

In Figur 2 ist ein Stützring 76 dargestellt, dessen Innenloch von einem kleineren Durchmesser 76a über eine konische Ringstufe 76b auf einen größeren Durchmesser 76c übergeht, wie bei dem in Figur 1 dargestellten Stützring 64 Insoweit stimmt der Stützung 76 mit dem Stützring 64 überein. Im Unterschied zum Stützring 64 ist der Stützring 76 mit einem Führungsring 78 umspritzt, der den Stützring 76 am Umfang umschließt. Anstelle lösbar mittels einer Clipsverbindung ist der Führungsring 78 also unlösbar durch Umspritzen mit dem Stützring 76 verbunden. Zur Verbesserung des Halts auf dem Stützring 76 weist der Führungsring 78 einen umlaufenden, nach innen stehenden Wulst 80 mit halbkreisförmigem Querschnitt auf, der in einer Nut 82 mit halbkreisförmigem Nutquerschnitt des Stützrings 76 einliegt. Der Führungsring 78 umschließt den Stützring 76 ausschließlich an dessen Umfang, der Führungsring 78 bedeckt nicht eine Stirnfläche des Stützrings 76. Im übrigen stimmen der in Figur 2 dargestellte Stützring 76 mit dem Führungsring 78 mit dem in Figur 1 dargestellten Stützring 64 mit dem Führungsring 66 überein und können problemlos an deren Stelle Verwendung finden.

## Patentansprüche

1. Kolbenpumpe für eine hydraulische Fahrzeugbremsanlage, mit einem in einem Pumpengehäuse axialverschieblichen Kolben, der zu einer in axialer Richtung hinund hergehenden Hubbewegung antreibbar ist, mit einem auf den Kolben aufgeschobenen Führungsring, der den Kolben axial im Pumpengehäuse führt, und mit einem am Kolben angebrachten, sich mit dem Kolben mitbewegenden Stützring, gegen den sich der Führungsring axial in zumindest eine Richtung abstützt, wobei der Führungsring (66; 78) und der Stützring (64; 76) zu einer Baueinheit verbunden sind.

2. Kolbenpumpe nach Anspruch 1, **dadurch gekennzeichnet, daß** der Führungsring (66) und der Stützung (64) mit einer Clipsverbindung (66c) miteinander verbunden sind.

3. Kolbenpumpe nach Anspruch 1, **dadurch gekennzeichnet, daß** der Stützring (76) mit dem Führungsring (78) umspritzt ist.

4. Kolbenpumpe nach Anspruch 1, **dadurch gekennzeichnet, daß** der Stützring (64; 76) kraftschlüssig auf den Kolben (10) aufgepreßt ist

5. Kolbenpumpe nach einem der vorhergehenden Ansprüche, **dadurch gekennzeichnet, daß** der Kolben (10) eine Stützfläche (62) aufweist, an der sich der Stützring (64; 76) axial in zumindest einer Richtung abstützt.

6. Kolbenpumpe nach Anspruch 5, **dadurch gekennzeichnet, daß** der Kolben (10) einen durchmessergrößeren Abschnitt (10a) und einen durchmesser kleineren Abschnitt (10b) aufweist, und daß ein Übergang (62) zwischen dem durchmessergrößeren Abschnitt (10a) und dem durchmesserkleineren Abschnitt (10b) des Kolbens (10) die Stützfläche des Kolbens (10) bildet.

7. Kolbenpumpe nach Anspruch 6, **dadurch gekennzeichnet, daß** der Stützring (64; 76) in radialer Richtung vom durchmessergrößeren Abschnitt (10a) des Kolbens (10) gehalten wird.

## Claims

1. Reciprocating pump for a hydraulic vehicle brake system, with a piston which is axially displaceable within a pump casing and which can be driven in an axially to-and-fro lifting movement, with a guide ring which is pushed onto the piston and which guides the piston axially in the pump casing, and with a supporting ring which is attached to the piston and co-moves with the piston and against which the guide ring is supported axially in at least one direction, the guide ring (66; 78) and the supporting ring (64, 76) being connected to form a structural unit.

2. Reciprocating pump according to Claim 1, **characterized in that** the guide ring (66) and the supporting ring (64) are connected to one another by means of a snap connection (66c).

3. Reciprocating pump according to Claim 1, **characterized in that** the guide ring (78) is injection-moulded around the supporting ring (76).

4. Reciprocating pump according to Claim 1, **characterized in that** the supporting ring (64; 76) is pressed non-positively onto the piston (10).

5. Reciprocating pump according to one of the preceding claims, **characterized in that** the piston (10) has a supporting surface (62), on which the supporting ring (64; 76) is supported axially in at least one direction.

6. Reciprocating pump according to Claim 5, **characterized in that** the piston (10) has a portion (10a) of larger diameter and a portion (10b) of smaller diameter, and **in that** a transition (62) between the portion (10a) of larger diameter and the portion (10b) of smaller diameter of the piston (10) forms the supporting surface of the piston (10).

7. Reciprocating pump according to Claim 6, **characterized in that** the supporting ring (64; 76) is held in a radial direction by the portion (10a) of larger diameter of the piston (10).

## Revendications

1. Pompe à pistons pour un système hydraulique de freinage d'un véhicule, avec un piston coulissant axialement à l'intérieur d'un carter de pompe, piston entraîné en un déplacement de course en va-et-vient dans la direction axiale, avec sur le piston une bague de guidage qui guide le piston axialement dans le carter de pompe, et avec une bague d'appui posée sur le piston, se déplaçant avec celui-ci, contre laquelle la bague de guidage s'appuie axialement dans au moins une direction, la bague de guidage (66, 78) et la bague d'appui (64, 76) étant reliées en une unité de construction.

2. Pompe à pistons selon la revendication 1,
**caractérisée en ce que**
la bague de guidage (66) et la bague d'appui (64) sont reliées l'une à l'autre par une liaison par clip (66c).

3. Pompe à pistons selon la revendication 1,
**caractérisée en ce que**
la bague d'appui (76) est enrobée par injection par la bague de guidage (78).

4. Pompe à pistons selon la revendication 1,
**caractérisée en ce que**
la bague d'appui (64, 76) est pressée de force sur le piston (10).

5. Pompe à pistons selon l'une des revendications précédentes,
**caractérisée en ce que**
le piston (10) présente une surface d'appui (62) sur laquelle la bague d'appui (64, 76) s'appuie axialement dans au moins une direction.

6. Pompe à pistons selon la revendication 5,
**caractérisée en ce que**
le piston (10) présente un segment de plus grand diamètre (10a) et un segment de plus petit diamètre (10b), et une transition (62) entre le segment de plus grand diamètre (10a) et le segment de plus petit diamètre (10b) forme la surface d'appui du piston (10).

7. Pompe à pistons selon la revendication 6,
**caractérisée en ce que**
la bague d'appui (64, 76) est maintenue dans la direction radiale par le segment de plus grand diamètre (10a) du piston (10).
